# EUROPEAN PATENT APPLICATION

(11) **EP 3 851 973 A1**
(43) Date of publication of application: **21.07.2021**
(21) Application number: 19880508.7
(22) Date of filing: 06.06.2019
(51) Int. Cl.: G06F 16/25

(54) **DATA COLLECTION AND PROCESSING METHOD, APPARATUS AND SYSTEM**

(30) Priority: 30.10.2018 CN 201811279047
(71) Applicant: HUAWEI TECHNOLOGIES CO., LTD., Shenzhen, Guangdong 518129 (CN)
(72) Inventor: YANG, Wenle, Shenzhen, Guangdong 518129 (CN); LUO, Yong, Shenzhen, Guangdong 518129 (CN); LIN, Wei, Shenzhen, Guangdong 518129 (CN)
(74) Representative: Gill Jennings & Every LLP
(86) International application number: PCT/CN2019/090314
(87) International publication number: WO 2020/087926

(57) **Abstract**

This application discloses a data collection and processing method, apparatus, and system. The system includes a data processing apparatus. The data processing apparatus is configured to: receive data that is in a format of a first mechanism and that is sent by the network device, preprocess the data, convert the preprocessed data into data in a format of a second mechanism, and send the data in the format of the second mechanism to a data collection and analysis apparatus. The data collection and analysis apparatus is configured to perform analysis based on the data after receiving the data sent by the data processing apparatus. In the system, the data processing apparatus may provide a unified northbound interface, and output data in a unified format, thereby reducing configuration requirements on a management and control device and a data collection and analysis apparatus, and improving value density of reported data.

## Description

This application claims priority to Chinese Patent Application No. 201811279047.0, filed with the Chinese Patent Office on October 30, 2018 and entitled "DATA COLLECTION AND PROCESSING METHOD, APPARATUS, AND SYSTEM", which is incorporated herein by reference in its entirety.

### TECHNICAL FIELD

This application relates to the field of communications technologies, and in particular, to a data collection and processing method, apparatus, and system.

### BACKGROUND

In 2018, the broadband forum (broadband forum, BBF) officially released a cloud central office (cloud central office, CloudCO) architecture standard. This standard provides a key architecture standard reference for operators to reconstruct a broadband network architecture and is a key step toward cloud-based networks. The CloudCO standard formulated by the BBF redefines access and metropolitan area networks by using a cloud architecture, to build a cloud broadband platform with an open interface, so as to enable operators to effectively provide a new service and shorten time to market of a new service. The standard decouples conventional network element functions and cloudifies decoupled network functions. In addition, a northbound application programming interface (application programming interface, API) is defined to enable operators to effectively implement automatic life cycle management for various services, providing automatic service provisioning and automatic network deployment. In addition, in the CloudCO, smooth evolution and upgrade of an existing system are considered to ensure effective compatibility with an existing network system, and a corresponding interface is designed.

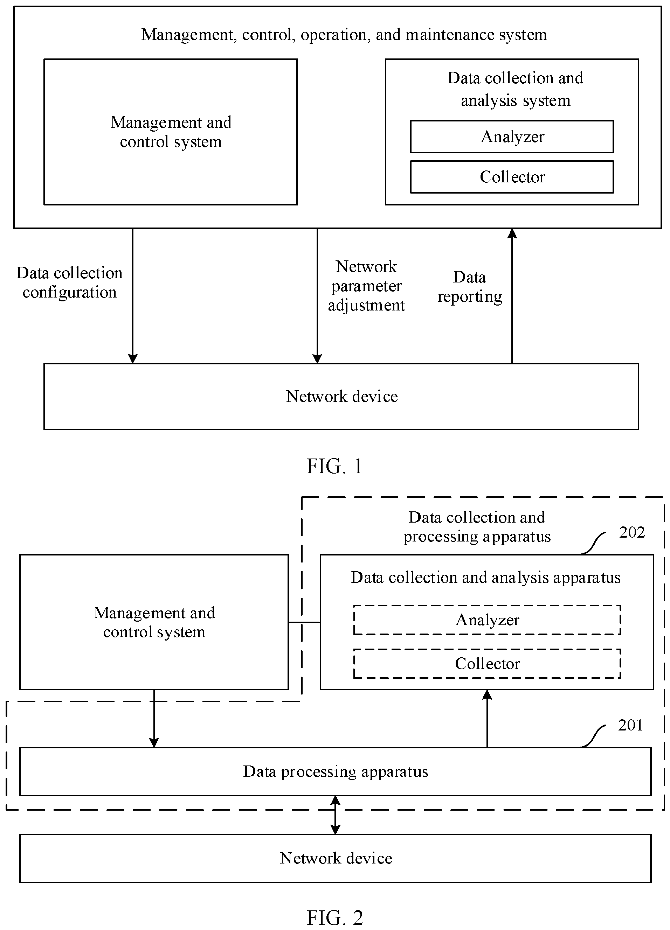

Currently, the CloudCO architecture lacks definitions of functions of network data collection and intelligent analysis. The network data collection and the intelligent analysis can implement network data statistics collection, network apparatus monitoring, network model training, prediction, and the like. In a non-CloudCO architecture, a management and control (management and control system for short) system may send data collection configuration information (used to request to obtain network data) to a network device. The network device sends the data to a data collection and analysis system based on the configuration information. The data collection and analysis system performs statistics collection, analysis, model training, and the like on the received data, and outputs an analysis result to provide guidance on a resolution to a network problem, such as fault diagnosis, parameter optimization, and the like, as shown in FIG. 1. Common data monitoring mechanisms include data collection mechanisms based on a simple network management protocol (simple network management protocol, SNMP), a command line interface (command line interface, CLI), a syslog protocol, and the like. With requirements of network automation and intelligence on big data in the future, a highly efficient telemetry collection mechanism based on Google-developed remote procedure call (Google remote procedure call, gRPC)/Google-developed protocol buffers (Google protocol buffers, GPB) emerges. In actual network deployment, there may be a scenario in which a network device supports different collection mechanisms. Therefore, data collection configuration and data reporting need to be compatible with a plurality of collection mechanisms. The management and control system delivers data collection configuration information to each network device by using a data collection mechanism supported by the network device. Correspondingly, data reported by different network devices based on different data collection mechanisms may differ in whether the data is structured data and differ in structured formats. The data collection and analysis system needs to support parsing and processing of data in different formats.

If the CloudCO architecture uses a data collection architecture shown in FIG. 1, different data collection mechanisms need to be configured for the data collection and analysis system, to collect data from different network devices and receive data sent by different network devices. A configuration requirement is relatively high, a processing process is relatively complex, and massive network data is directly sent to the collection and analysis system, bringing great pressure to the network and collection and analysis system. The data collection and analysis system is heavily loaded especially when there is a requirement for big data.

### SUMMARY

This application provides a data collection and processing method, apparatus, and system, to reduce configuration requirements on a device for sending data collection configuration information and a data collection and analysis apparatus.

According to a first aspect, this application provides a data collection and processing system, where the system is applied to a cloud central office CloudCO architecture and includes:
a data processing apparatus, configured to: receive data that is in a format of a first mechanism and that is sent by a network device; preprocess the data; and convert the preprocessed data into data in a format of a second mechanism, and sending the data in the format of the second mechanism to a data collection and analysis apparatus; and
the data collection and analysis apparatus, configured to perform analysis based on the data after receiving the data sent by the data processing apparatus, where
the preprocessing includes one or more of the following: data format conversion, data computation and supplementation, data compression and tailoring, data anonymization, data serialization, and transmission control protocol indicator calculation.

In the foregoing embodiment of this application, the data processing apparatus may provide a unified northbound interface, and output data in a unified format, that is, the data in the format of the second mechanism, thereby simplifying a processing process of the data collection and analysis apparatus, and reducing configuration requirements on a management and control device and the data collection and analysis apparatus. In addition, the data processing apparatus preprocesses the received data, which helps improve data value density, and further reduces load of a network and the data collection and analysis apparatus.

In a possible implementation, the data processing apparatus is further configured to receive data that is in the format of the second mechanism and that is sent by the network device, preprocess the data, and send the preprocessed data in the format of the second mechanism to the data collection and analysis apparatus.

In a possible implementation, the data processing apparatus is further configured to receive data collection configuration information in the format of the second mechanism; and if it is determined that the network device does not support the second mechanism, convert the data collection configuration information in the format of the second mechanism into data collection configuration information in the format of the first mechanism, and send the data collection configuration information in the format of the first mechanism to the network device.

In a possible implementation, the data processing apparatus is further configured to receive the data collection configuration information in the format of the second mechanism; and if it is determined that the network device supports the second mechanism, send the data collection configuration information in the format of the second mechanism to the network device.

In a possible implementation, the data collection and analysis apparatus includes a collector and an analyzer, where the collector is configured to: decode and process the received data in the format of the second mechanism; and the analyzer is configured to perform analysis and decision on decoded data.

In a possible implementation, the collector includes a distributed collector and/or a centralized collector.

In a possible implementation, the data processing apparatus is disposed on the network device; or disposed at a broadband access abstraction layer in a CloudCO architecture; or disposed in a remote regional DC.

According to a second aspect, an embodiment of this application further provides a data collection and processing method, where the method is applied to a cloud central office CloudCO architecture and includes:
receiving data that is in a format of a first mechanism and that is sent by the network device; preprocessing the data; and converting the preprocessed data into data in a format of a second mechanism, and sending the data in the format of the second mechanism to a data collection and analysis apparatus, where the preprocessing includes one or more of the following: data format conversion, data computation and supplementation, data compression and tailoring, data anonymization, data serialization, and transmission control protocol indicator calculation.

In a possible implementation, the method further includes: receiving data that is in the format of the second mechanism and that is sent by the network device, preprocessing the data, and sending the preprocessed data in the format of the second mechanism to the data collection and analysis apparatus.

In a possible implementation, the method further includes: receiving data collection configuration information in the format of the second mechanism; and if it is determined that the network device does not support the second mechanism, converting the data collection configuration information in the format of the second mechanism into data collection configuration information in the format of the first mechanism, and sending the data collection configuration information in the format of the first mechanism to the network device.

In a possible implementation, the method further includes: receiving the data collection configuration information in the format of the second mechanism; and if it is determined that the network device supports the second mechanism, sending the data collection configuration information in the format of the second mechanism to the network device.

According to a third aspect, an embodiment of this application further provides a data processing apparatus, including:
a receiving unit, configured to receive data that is in a format of a first mechanism and that is sent by the network device;
a preprocessing unit, configured to preprocess the data;
a conversion unit, configured to convert the preprocessed data into data in a format of a second mechanism; and
a sending unit, configured to send the data in the format of the second mechanism to a data collection and analysis apparatus, where
the preprocessing includes one or more of the following: data format conversion, data computation and supplementation, data compression and tailoring, data anonymization, data serialization, and transmission control protocol indicator calculation.

In a possible implementation, the receiving unit is further configured to receive data that is in the format of the second mechanism and that is sent by the network device;
the preprocessing unit is further configured to preprocess the data in the format of the second mechanism; and
the sending unit is further configured to send the preprocessed data in the format of the second mechanism to the data collection and analysis apparatus.

In a possible implementation, the receiving unit is further configured to receive data collection configuration information in the format of the second mechanism;
the conversion unit is further configured to: if it is determined that the network device does not support the second mechanism, convert the data collection configuration information in the format of the second mechanism into data collection configuration information in the format of the first mechanism; and
the sending unit is further configured to send the data collection configuration information in the format of the first mechanism to the network device.

In a possible implementation, the receiving unit is further configured to receive the data collection configuration information in the format of the second mechanism; and
the sending unit is further configured to: if it is determined that the network device supports the second mechanism, send the data collection configuration information in the format of the second mechanism to the network device.

According to a fourth aspect, an embodiment of this application provides a data processing apparatus, including a processor and a memory, where the memory is configured to store a program, and the processor invokes the program stored in the memory to perform the method according to any possible implementation in the second aspect.

According to a fifth aspect, an embodiment of this application provides a computer readable storage medium. The computer readable storage medium stores a computer instruction. When the instruction is run on a computer, the computer is enabled to perform the method according to any possible implementation in the second aspect.

According to a sixth aspect, an embodiment of this application provides a computer program product including an instruction. When the computer program product is run on a computer, the computer is enabled to perform the method according to any possible implementation in the second aspect.

### BRIEF DESCRIPTION OF DRAWINGS

FIG. 1 is a schematic diagram of a data collection architecture in the prior art;
FIG. 2 is a schematic diagram of a data collection and processing system according to an embodiment of this application;
FIG. 3 is a schematic flowchart of a data collection and processing method according to an embodiment of this application;
FIG. 4 is a schematic diagram of a data collection and processing system according to an embodiment of this application;
FIG. 5a and FIG. 5b are schematic diagrams of a data collection and processing system according to an embodiment of this application;
FIG. 6 is a schematic structural diagram of a data processing apparatus according to an embodiment of this application; and
FIG. 7 is a schematic structural diagram of a data processing apparatus according to an embodiment of this application.

### DESCRIPTION OF EMBODIMENTS

To make the objectives, technical solutions, and advantages of this application clearer, the following further describes this application in detail with reference to the accompanying drawings.

In an existing data monitoring architecture, for each network device, a management and control system needs to determine a data collection mechanism supported by the network device, and then send data collection configuration information to the network device based on the data collection mechanism supported by the network device. The network device reports data based on the data collection configuration information. Structures of data reported in different data collection mechanisms are different. Therefore, in a conventional data monitoring architecture, processing processes of a management and control system and a data collection and analysis system are complex, especially when a large-scale network architecture and big data requirements are imposed. The management and control system and the data collection and analysis system are heavily burdened in the case of a large quantity of network devices and big data collection.

Features of some common data collection mechanisms may be shown in Table 1.

**Table 1**

| | SNMP GET | SNMP trap | CLI | Syslog | Telemetry |
|---|---|---|---|---|---|
| Work mode | Pull mode | Push mode | Pull mode | Push mode | Push mode |
| Precision | Minute level | Second level | Minute level | Second level | Sub-second level |
| Data range | All data | Only alarms | All data | Only time | All data |
| Structured or not | MIB-defined structure | MIB-defined structure Vendor-defined format | Unstructured | Unstructured | YANG module-defined structure Unified data stream format-based GPB |

As shown in Table 1, a work mode of an SNMP GET data collection mechanism is a pull mode, that is, the management and control system sends data collection configuration information once, and the network device reports collected data once. To obtain, a plurality of times or periodically, the data collected by the network device, the management and control system needs to send the data collection configuration information a plurality of times or periodically. In addition, data precision in the mechanism is at a minute level. That is, the management and control system sends the data collection configuration information to the network device by using a minute as a minimum time unit, and the collected data reported by the network device uses a minute as a minimum time unit. For example, the network device sends, for reporting, an average value of collected data collected within five minutes, and reported data can reflect only an average status within the five minutes and cannot well reflect an instantaneous emergency status. Data reported by the network device in the mechanism is structured data on a basis of a management information base (management information base, MIB).

A work mode of an SNMP trap data collection mechanism is a push mode. That is, the management and control system sends the data collection configuration information once to indicate the network device to report data when a trigger event occurs. Data precision of the mechanism is at a second level, which can well reflect an instantaneous status. However, the mechanism cannot collect all data, but can collect only an alarm event. That is, the network device reports, when an alarm event occurs, a type of the alarm event, a cause of the alarm event, and the like. Data reported by network device in the mechanism is structured data defined by vendors on a basis of MIB structured data.

A work mode of a CLI data collection mechanism is a pull mode, data precision is at a minute level, and all data can be collected. However, data reported by network device in the mechanism is unstructured data, and the unstructured data increases processing difficulty of a data receiver.

A work mode of a syslog data collection mechanism is a push mode, and data precision is at a second level. However, only an event can be collected, and data reported by network device in the mechanism is unstructured data.

A work mode of a telemetry data collection mechanism is a push mode. Data precision is high and at a sub-second level, and all data can be collected. Data reported by network device in the mechanism is YANG model-based structured data encoded by using GPB. The telemetry data collection mechanism can be further extended in different application scenarios. For example, in the mechanism, data transmission may be performed between a network device in an access network and a data processing apparatus by using a gRPC channel. A network device in a home network may be connected to the data processing apparatus in another connection manner to implement data transmission.

It can be learned that, in a scenario of a large-scale network architecture, if data collection mechanisms supported by network devices are different, a process in which the data collection and analysis system performs statistics collection and analysis based on data reported by the network devices is very complex. In addition, the network device directly sends raw network data to the data collection and analysis system, and value density of the reported data is relatively low. The data collection and analysis system needs to perform a large quantity of processing operations and is heavily loaded.

To resolve the foregoing technical problems, an embodiment of this application provides a data collection and processing system and method, which may be applied to a CloudCO architecture.

Specifically, a data processing apparatus may be added to the CloudCO architecture, and is configured to receive data output provided in a unified format, and share load of a data collection and analysis system. As shown in FIG. 2, the data collection and processing system provided in this embodiment of this application may include a data processing apparatus 201 and a data collection and analysis apparatus 202. It should be understood that the data collection and processing system may be further used in combination with another device. A management and control device and a network device shown in FIG. 2 are merely examples.

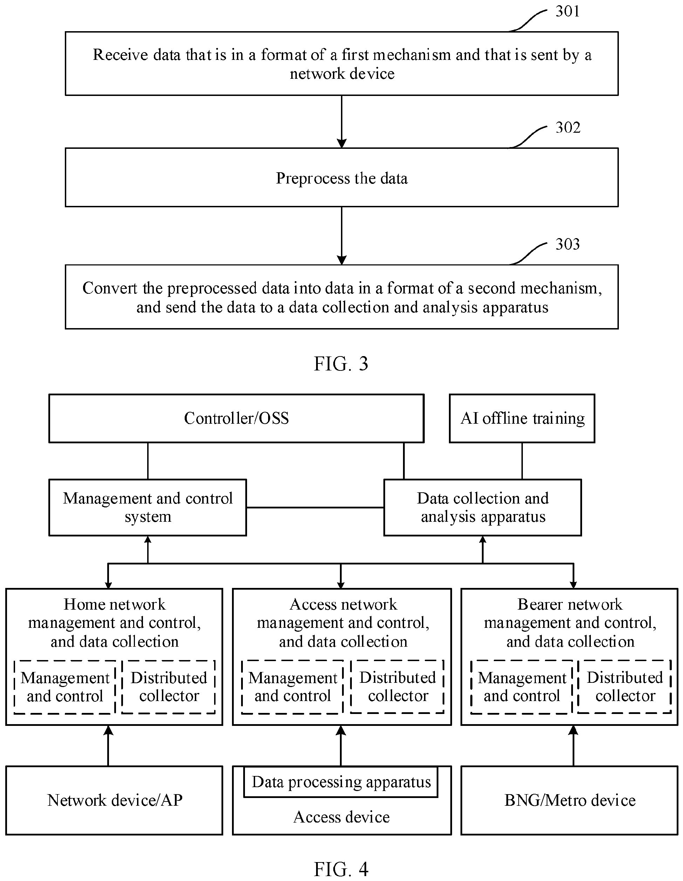

The data processing apparatus 201 may be configured to perform the data collection and processing method shown in FIG. 3. The method may include the following steps.

Step 301: Receive data that is in a format of a first mechanism and that is sent by a network device.

The first mechanism is a data collection mechanism supported by the network device. Therefore, the data reported by the network device is data in the format of the first mechanism.

Step 302: Preprocess the data.

For example, after receiving the data reported by the network device, the data processing apparatus may parse the data, and analyze parsed data. If it is determined that a part of the data is duplicate data, invalid data, or data with a relatively large deviation due to strong interference, the data processing apparatus tailors this part of the data. Alternatively, the data processing apparatus determines that a piece of data is missing, the data processing apparatus may estimate the missing data based on other data, or request the network device to send the data again, so as to supplement the data. Then, tailored and/or supplemented data is uniformly structured and reported to the data collection and analysis apparatus, so that the data reported to the data collection and analysis apparatus is valid data, and the data collection and analysis apparatus can simplify or omit the step of tailoring data.

For another example, the data processing apparatus may further convert a format of the received data reported by the network device, to convert different data formats into a unified format, for example, convert data in a text format into data in a binary format.

For another example, the data processing apparatus may further transform sensitive information in the collected data by using an anonymization rule, to implement reliable protection on sensitive private data, namely, data anonymization.

In addition, a process of preprocessing the data by the data processing apparatus may further include structuring and serializing the data, performing transmission control protocol (transmission control protocol, TCP) indicator calculation, and the like. It should be understood that the foregoing preprocessing is merely an example. The data processing apparatus may further perform other preprocessing on the received data, so as to improve data value density and reduce load of a network and the data collection and analysis apparatus.

Step 303: Convert the preprocessed data into data in a format of a second mechanism, and send the data in the format of the second mechanism to the data collection and analysis apparatus.

Data collection mechanisms supported by different network devices may be different, and formats of reported data may also be different. To reduce load of the data collection and analysis apparatus 202, after receiving the data reported by the network device, the data processing apparatus 201 may convert the data into data in a unified format and then send the data in the unified format to the data collection and analysis apparatus 202.

If the data processing apparatus 201 determines that the data in the format of the first mechanism is not a preset unified format, the data processing apparatus 201 converts the preprocessed data into the data in the format of the second mechanism, where the second mechanism is a preset unified format.

For example, if the second mechanism is a telemetry data collection mechanism, and the first mechanism supported by the network device is an SNMP GET data collection mechanism, data sent by the network device to the data processing apparatus is MIB-based structured data, and the data processing apparatus may parse the MIB-based structured data, convert parsed data information of the network device into a YANG model, perform GPB encoding, and then send the new structured data to the data collection and analysis apparatus by using a gRPC or user datagram protocol (user datagram protocol, UDP) channel.

The data processing apparatus converts the received data sent by the network device into data that is based on a unified reporting mechanism, and sends the data to the data collection and analysis apparatus, so that data received by the data collection and analysis apparatus from different network devices has a unified encoding format. Therefore, the data collection and analysis apparatus may parse the data from different network devices by using one algorithm, thereby simplifying a processing process of the data collection and analysis apparatus, and reducing processing difficulty.

Certainly, the network device may also support the preset second mechanism. After receiving the data that is in the format of the second mechanism and that is sent by the network device, the data processing apparatus 201 preprocesses the data in the format of the second mechanism, and sends the preprocessed data in the format of the second mechanism to the data collection and analysis apparatus 202.

In a possible implementation, before step 301, the data processing apparatus 201 may further receive data collection configuration information in the format of the second mechanism, so that the network device reports data based on the data collection configuration information.

The data processing apparatus 201 may receive data collection configuration information from the management and control system, the data collection and analysis apparatus, or another device.

In a data collection architecture shown in FIG. 2, because a management and control device requesting data collection directly sends the data collection configuration information to the network device, capability information of the network device, namely, a data collection mechanism supported by the network device, needs to be obtained in advance, and then the data collection configuration information is sent to the network device by using the data collection mechanism supported by the network device. In a large-scale network architecture, different network devices may support different data collection mechanisms. Therefore, for different network devices, the management and control system may need to send the data collection configuration information based on different data collection mechanisms.

In this embodiment of this application, if the data processing apparatus 201 determines that the network device does not support the second mechanism, the data processing apparatus 201 converts the data collection configuration information in the format of the second mechanism into data collection configuration information in the format of the first mechanism supported by the network device, and sends the data collection configuration information in the format of the first mechanism to the network device.

The data processing apparatus 201 may obtain the capability information of the network device in advance, determine which data collection mechanisms are supported by the network device, and after receiving the data collection configuration information in the format of the second mechanism, determine whether the network device supports the second mechanism. If it is determined that the network device does not support the second mechanism, the data processing apparatus may convert the received data collection configuration information into the data collection configuration information in the format of the first mechanism supported by the network device, and send the converted configuration information to the network device, so that the network device can identify the data collection configuration information and report data based on the data collection configuration information. For example, if the second mechanism is the telemetry data collection mechanism, and a network device 1 supports the SNMP GET data collection mechanism, the data processing apparatus may convert data collection configuration information in a format of the telemetry data collection mechanism into data collection configuration information in a format of the SNMP GET data collection mechanism. If a network device 2 supports a syslog data collection mechanism, the data processing apparatus converts data collection configuration information in the format of the telemetry data collection mechanism into data collection configuration information in a format of the syslog data collection mechanism.

If the second mechanism is a "push mode" data collection mechanism, the second mechanism may be used to request the network device to periodically report data. However, the first mechanism supported by the network device is a "pull-mode" data collection mechanism, and the data collection configuration information in the mechanism cannot indicate the network device to periodically report data. Therefore, in a possible implementation, if the received data collection configuration information is used to indicate the network device to periodically report data, and the first mechanism supported by the network device does not support data collection configuration information in the "push mode" mode, the data processing apparatus may periodically send the data collection configuration information in the converted format of the first mechanism to the network device, so that the network device can periodically report data.

For example, the second mechanism is a telemetry data collection mechanism, and a work mode of the second mechanism is a "push mode". Received data collection configuration information indicates the network device to periodically report to the network device based on a first period. However, a first mechanism supported by the network device is an SNMP GET data collection mechanism, a work mode of the first mechanism is a pull mode, and data cannot be periodically reported based on collection configuration information. In this case, after converting received data collection configuration information in a format of the telemetry data collection mechanism into data collection configuration information in a format of the SNMP GET data collection mechanism, the data processing apparatus may periodically send the converted data collection configuration information to the network device based on the first period, so that the network device periodically reports data based on the first period.

In the foregoing implementation, the management and control system or another apparatus that sends the data collection configuration information may send the data collection configuration information by using a unified data collection mechanism without a need to consider a data collection mechanism supported by the network device, thereby reducing complexity of the management and control system. For example, in data collection mechanisms shown in Table 1, comprehensive performance of the telemetry data collection mechanism is relatively good, and the telemetry data collection mechanism supports a "push mode" to avoid frequently sending the data collection configuration information to the network device. Data precision is relatively high, collection of all data is supported, and reported data is structured data, which facilitates processing by a data receiver. Therefore, the telemetry data collection mechanism may be set as the second mechanism, that is, the management and control system or another apparatus may send the data collection configuration information based on the telemetry data collection mechanism. It should be understood that setting the telemetry data collection mechanism as the second mechanism is merely an example, and another data collection mechanism may also be set as the second mechanism, and is not limited to the data collection mechanisms shown in Table 1.

After receiving the data collection configuration information in the format of the first mechanism, the network device reports data based on the data collection configuration information. For example, if data collection configuration information in the format of the telemetry data collection mechanism received by the data processing apparatus 201 requests to periodically obtain load information (for example, central processing unit (CPU) utilization, resource utilization, and the like of the network device) of the network device, and the network device 1 supports the SNMP GET data collection mechanism, the data processing apparatus may convert the received data collection configuration information into data collection configuration information in the format of the SNMP GET data collection mechanism, and periodically send the data collection configuration information in the format of the SNMP GET data collection mechanism to the network device. After receiving the data collection configuration information in the format of the SNMP GET data collection mechanism sent by the data processing apparatus, the network device reports the load information of the network device to the data processing apparatus, where the load information is carried in MIB-based structured data. Because the network device periodically receives the data collection configuration information, the network device periodically reports the load information, that is, the data processing apparatus can periodically obtain the load information of the network device.

Certainly, the network device may alternatively support the second mechanism. In this case, after receiving the data collection configuration information in the format of the second mechanism, the data processing apparatus 201 sends the data collection configuration information to the network device without a need to perform format conversion.

The data collection and analysis apparatus 202 is configured to perform analysis based on the data after receiving the data sent by the data processing apparatus.

In an existing data collection architecture, different data collection mechanism algorithms need to be configured for a management and control system (or another device having a data collection requirement) and a data collection and analysis apparatus, so as to collect data from different network devices and receive data sent from different network devices. A configuration requirement is relatively high, and a processing process is relatively complex. However, in the foregoing embodiment of this application, the data processing apparatus may provide a unified northbound interface, and receive data collection configuration information in the unified format, namely, the data collection configuration information in the format of the second mechanism; and output data in the unified format, namely, the data in the format of the second mechanism, so that processing processes of the management and control system (or another device having a data collection requirement) and the data collection and analysis apparatus that communicate with the data processing apparatus are simplified, and configuration requirements of a management and control device and the data collection and analysis apparatus are reduced.

In the data collection architecture shown in FIG. 2, the management and control system sends the data collection configuration information to the network device, and then the network device sends the collected data to the data collection and analysis apparatus. The data collection and analysis apparatus performs analysis and processing based on the received data, and performs adjustment, optimization, and the like on a network based on a result.

However, in some service scenarios that have a relatively high real-time requirement, fast response and adjustment may need to be performed based on a current status. In other words, the service scenario has a relatively high requirement on a delay in parameter optimization, result prediction, and the like. To enable the CloudCO architecture to meet such requirements, in some embodiments, the data processing apparatus 201 may also correspondingly analyze the data sent by the network device, and send an analysis result, an optimization policy, or the like to the network device and/or the data collection and analysis apparatus, to meet a delay requirement of a network service.

For example, a service processed by the network device 2 has a relatively high real-time requirement. To ensure a service requirement, the data processing apparatus may analyze data reported by the network device. The data processing apparatus finds, based on data analysis, that traffic of the network device increases sharply at a moment T1. To ensure that service quality is not affected, a parameter of the network device needs to be optimized. The data processing apparatus may send a parameter optimization request to the network device, or the data processing apparatus may determine an optimized parameter of the network device based on data analysis, and send the determined optimized parameter to the network device, so as to implement a quick response and meet a real-time requirement of the network device.

Certainly, the data processing apparatus 201 may further send an analysis result to the data collection and analysis apparatus, so that the data collection and analysis apparatus can obtain a current status of the network device, or perform global data analysis based on a current data analysis result of the network device.

The foregoing data processing apparatus may be disposed on an access network device in a distributed manner, for example, built into an access network device OLT, as shown in FIG. 4. Information may be exchanged between the data collection and analysis apparatus and the management and control system, for example, the data collection and analysis apparatus sends a network optimization policy to the management and control system. The management and control system provides a network topology, resource usage, configuration information, and the like to the data collection and analysis apparatus. Data may be transmitted between a network device equipped with the data processing apparatus and the data collection and analysis apparatus through a gRPC channel. Alternatively, the data processing apparatus may be disposed at a broadband access abstraction (broadband access abstraction, BAA) layer in the CloudCO architecture, or may be disposed in a regional data center (data center, DC).

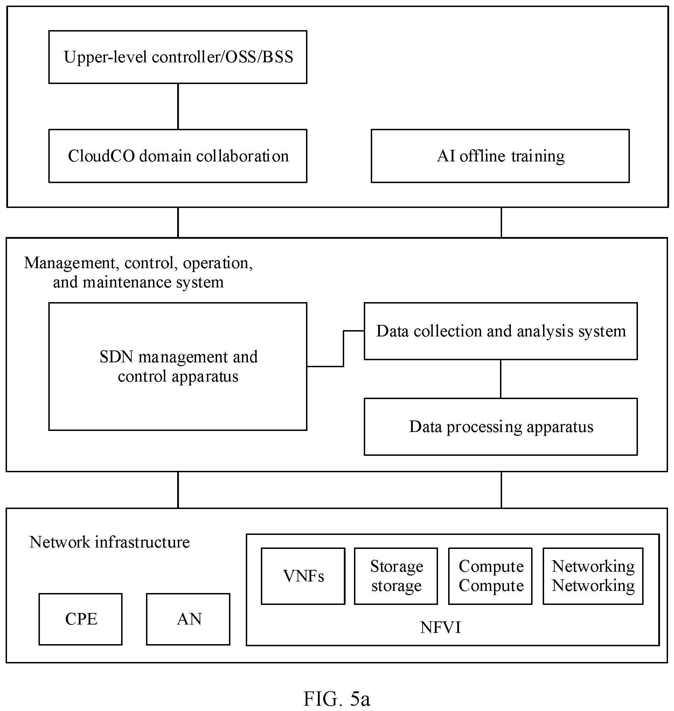

In another possible implementation, in a scenario in which a unified data collection mechanism is used, for example, all network devices support the telemetry data collection mechanism, the data processing apparatus may only preprocess data without a need to perform conversion of the data collection configuration information and conversion of the reported data, as shown in FIG. 5a.

Optionally, the data collection and analysis apparatus may further include a collector and an analyzer, where the collector is configured to: decode and process the received data in the format of the second mechanism, and send decoded and processed data to the analyzer. The analyzer is configured to analyze and store the received data, for example, provide data analysis, online training, online inference, and the like, and then determine a cause of a network fault or provide a network optimization policy or the like based on an analysis result. The network optimization policy provided by the data collection and analysis apparatus may be sent to the management and control system, and the management and control system outputs an optimization instruction and sends the optimization instruction to the network device for configuration, thereby forming an automatic closed loop. Based on this, the data collection and analysis apparatus may further provide different applications, such as intelligent operation and maintenance, user experience management, and intelligent network operation, for use by an operator or a third party.

Further, the collector may be a centralized collector, or may be a distributed collector, or certainly, may include both a centralized collector and a distributed collector. Optionally, the centralized collector and the analyzer may be deployed together, or may be separately deployed. Optionally, the data processing apparatus may be deployed between the network device and the distributed collector, or the data processing apparatus may be deployed on the network device, or the data processing apparatus may be deployed together with the distributed collector. It should be understood that the foregoing data processing apparatus, distributed collector, and/or centralized collector may be logical units, and may be independently deployed, or may be deployed in a same physical device.

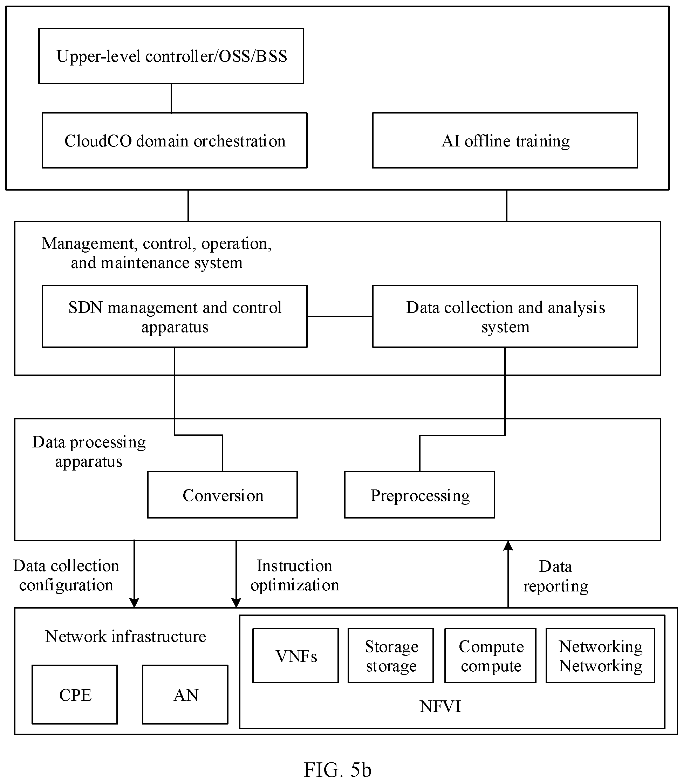

In a specific embodiment, the foregoing embodiment of this application may be applied to an architecture shown in FIG. 5b, and the architecture is applied to the CloudCO architecture. As shown in the figure, the architecture may include a plurality of network devices in a network infrastructure, a data processing apparatus, and an SDN management and control apparatus, and may further include a CloudCO domain orchestrator. Further, the structure may interwork, in a northbound direction, with an end-to-end service orchestrator/operation support system (operator specific service, OSS)/service support system (Business support system, BSS), and an artificial intelligence (artificial intelligence, AI) offline training apparatus.

The network device may include a wireless access point (access point, AP), customer-premises equipment (customer premise equipment, CPE), an access network device (an OLT, an ONU, or the like), a broadband network gateway (broadband network gateway, BNG) or another metro device, a network functions virtualization infrastructure (network functions virtualization infrastructure, NFVI) and a virtualized network function (virtualized network function, VNF) in a virtualization scenario, and the like.

The data processing apparatus may include a conversion module, configured to implement configuration information conversion and data conversion between the foregoing different mechanisms. The apparatus may further include a data preprocessing module and a data analysis module, configured to preprocess and analyze the received data.

A management, control, and operation and maintenance system may include an SDN management and control apparatus and a data collection and analysis apparatus, and may further include a CloudCO domain orchestrator. Certainly, the CloudCO domain orchestrator may be deployed together with the SDN management and control apparatus.

The SDN management and control apparatus may be configured to send the data collection configuration information to the network device, to request to collect corresponding data, so as to monitor a current network status, a running status of each network device, and the like; and simultaneously provide a network topology, resource usage, configuration information, and the like to the data collection and analysis apparatus. In addition, the data collection configuration information herein may alternatively be delivered by the data collection and analysis apparatus to the network device.

The data collection and analysis apparatus is configured to analyze and store the received data, for example, provide data analysis, online training, online inference, and the like, and then determine a cause of a network fault cause or provide a network optimization policy based on an analysis result. Further, the data collection and analysis apparatus may send the network optimization policy and the like to the management and control system, and the management and control system outputs an optimization instruction and sends the optimization instruction to the network device for configuration, thereby forming an automatic closed loop. For a scenario in which cross-domain decision-making or end-to-end analysis is required, the data collection and analysis apparatus may further send an analysis result or a policy to an upper-layer decision-making system, for example, a CloudCO domain orchestration layer or an end-to-end service orchestrator/operation support system (operator specific service, OSS)/business support system (Business support system, BSS) layer. Based on this, the data collection and analysis apparatus may further provide different applications, such as intelligent operation and maintenance, user experience management, and intelligent network operation, for use by an operator or a third party.

Optionally, the CloudCO architecture may interwork with an end-to-end service orchestrator/operation support system (operator specific service, OSS)/service support system (Business support system, BSS), and the like by using a northbound interface, to complete end-to-end service-related orchestration, service operation, and management. This layer may further include an intelligent/automatic analysis function. In a scenario in which cross-domain decision-making or end-to-end analysis is required, by using the CloudCO northbound interface, a result or a policy sent by the analyzer is received and further analysis and decision-making are completed. In addition, the system may further support interworking with an AI offline training apparatus, and an offline training resource of a public cloud may be used to improve AI training results (for example, improve an AI model library and a feature library), reduce customer investment costs, and so on.

Based on a same technical concept, an embodiment of this application further provides a data collection and processing method. The method may be performed by the foregoing data processing apparatus.

Specifically, the data processing apparatus receives data that is in a format of a first mechanism and that is sent by the network device; preprocesses the data; and converts the preprocessed data into data in a format of a second mechanism, and sends the data in the format of the second mechanism to a data collection and analysis apparatus. The preprocessing includes one or more of the following: data format conversion, data computation and supplementation, data compression and tailoring, data anonymization, data serialization, and transmission control protocol indicator calculation.

In a possible implementation, the method further includes: receiving data that is in the format of the second mechanism and that is sent by the network device, preprocessing the data, and sending the preprocessed data in the format of the second mechanism to the data collection and analysis apparatus.

In a possible implementation, the method further includes: receiving data collection configuration information in the format of the second mechanism; and if it is determined that the network device does not support the second mechanism, converting the data collection configuration information in the format of the second mechanism into data collection configuration information in the format of the first mechanism, and sending the data collection configuration information in the format of the first mechanism to the network device.

In a possible implementation, the method further includes: receiving the data collection configuration information in the format of the second mechanism; and if it is determined that the network device supports the second mechanism, sending the data collection configuration information in the format of the second mechanism to the network device.

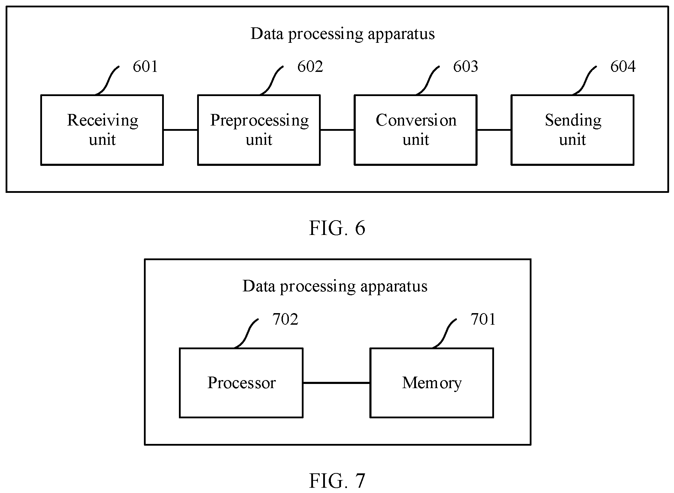

Based on a same technical concept, an embodiment of this application further provides a data processing apparatus, and may be configured to implement the foregoing method embodiments. The data processing apparatus may be shown in FIG. 6, and includes:
a receiving unit 601, configured to receive data that is in a format of a first mechanism and that is sent by the network device;
a preprocessing unit 602, configured to preprocess the data;
a conversion unit 603, configured to convert the preprocessed data into data in a format of a second mechanism; and
a sending unit 604, configured to send the data in the format of the second mechanism to a data collection and analysis apparatus.

The preprocessing includes one or more of the following: data format conversion, data computation and supplementation, data compression and tailoring, data anonymization, data serialization, and transmission control protocol indicator calculation.

In a possible implementation, the receiving unit 601 is further configured to receive data that is in the format of the second mechanism and that is sent by the network device;
the preprocessing unit 602 is further configured to preprocess the data in the format of the second mechanism; and
the sending unit 604 is further configured to send the preprocessed data in the format of the second mechanism to the data collection and analysis apparatus.

In a possible implementation, the receiving unit 601 is further configured to receive data collection configuration information in the format of the second mechanism; and
the conversion unit 603 is further configured to: if it is determined that the network device does not support the second mechanism, convert the data collection configuration information in the format of the second mechanism into data collection configuration information in the format of the first mechanism; and
the sending unit 604 is further configured to send the data collection configuration information in the format of the first mechanism to the network device.

In a possible implementation, the receiving unit 601 is further configured to receive the data collection configuration information in the format of the second mechanism; and
the sending unit 604 is further configured to: if it is determined that the network device supports the second mechanism, send the data collection configuration information in the format of the second mechanism to the network device.

It should be noted that the foregoing unit division is merely logical function division, and may be all or some integrated into one physical entity during actual implementation, or may be physically separated. In addition, these units may all be implemented in the form of software calling by processor elements. Alternatively, all of them may be implemented in a form of hardware. Alternatively, some units may be implemented in a form of software invoking by processor elements, and some units may be implemented in a form of hardware. The receiving unit and the sending unit may be disposed independently, or may form a transceiver unit. In addition, the transceiver unit and the processing unit may be integrated together, or may be implemented independently. The processor element may be an integrated circuit and has a signal processing capability. In an implementation process, steps in the foregoing methods or the foregoing units can be implemented by using a hardware integrated logical circuit in the processor element, or by using instructions in a form of software.

An embodiment of this application provides a data processing apparatus. A structure of the apparatus may be shown in FIG. 7, and includes a memory 701 and a processor 702. The memory 701 is configured to store a program, and the processor 702 invokes the program stored in the memory 701 to perform the foregoing data processing method.

An embodiment of this application provides a computer readable storage medium. The computer readable storage medium stores a computer instruction. When the instruction is run on a computer, the computer performs the method according to any possible implementation in the second aspect.

An embodiment of this application provides a computer program product including an instruction. When the computer program product is run on a computer, the computer is enabled to perform the method according to any possible implementation in the second aspect.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can indicate the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data collection and processing system, wherein the system is applied to a cloud central office CloudCO architecture and comprises:
a data processing apparatus, configured to: receive data that is in a format of a first mechanism and that is sent by the network device; preprocess the data; and convert the preprocessed data into data in a format of a second mechanism, and send the data in the format of the second mechanism to a data collection and analysis apparatus; and
the data collection and analysis apparatus, configured to perform analysis based on the data after receiving the data sent by the data processing apparatus, wherein
the preprocessing comprises one or more of the following: data format conversion, data computation and supplementation, data compression and tailoring, data anonymization, data serialization, and transmission control protocol indicator calculation.

2. The system according to claim 1, wherein the data processing apparatus is further configured to:
receive data that is in the format of the second mechanism and that is sent by the network device, preprocess the data, and send the preprocessed data in the format of the second mechanism to the data collection and analysis apparatus.

3. The system according to claim 1 or 2, wherein the data processing apparatus is further configured to: receive data collection configuration information in the format of the second mechanism; and if it is determined that the network device does not support the second mechanism, convert the data collection configuration information in the format of the second mechanism into data collection configuration information in the format of the first mechanism, and send the data collection configuration information in the format of the first mechanism to the network device.

4. The system according to any one of claims 1 to 3, wherein the data processing apparatus is further configured to: receive the data collection configuration information in the format of the second mechanism; and if it is determined that the network device supports the second mechanism, send the data collection configuration information in the format of the second mechanism to the network device.

5. The system according to any one of claims 1 to 4, wherein the data collection and analysis apparatus comprises a collector and an analyzer, wherein
the collector is configured to: decode and process the received data in the format of the second mechanism; and
the analyzer is configured to perform analysis and decision on decoded data.

6. The system according to claim 5, wherein the collector comprises a distributed collector and/or a centralized collector.

7. The system according to any one of claims 1 to 6, wherein the data processing apparatus is disposed on the network device; or disposed at a broadband access abstraction layer in a CloudCO architecture; or disposed in a remote regional DC.

8. A data collection and processing method, wherein the method is applied to a cloud central office CloudCO architecture and comprises:
receiving data that is in a format of a first mechanism and that is sent by the network device;
preprocessing the data; and
converting the preprocessed data into data in a format of a second mechanism, and sending the data in the format of the second mechanism to a data collection and analysis apparatus, wherein
the preprocessing comprises one or more of the following: data format conversion, data computation and supplementation, data compression and tailoring, data anonymization, data serialization, and transmission control protocol indicator calculation.

9. The method according to claim 8, further comprising:
receiving data that is in the format of the second mechanism and that is sent by the network device, preprocessing the data, and sending the preprocessed data in the format of the second mechanism to the data collection and analysis apparatus.

10. The method according to claim 8 or 9, further comprising:
receiving data collection configuration information in the format of the second mechanism; and if it is determined that the network device does not support the second mechanism, converting the data collection configuration information in the format of the second mechanism into data collection configuration information in the format of the first mechanism, and sending the data collection configuration information in the format of the first mechanism to the network device.

11. The method according to any one of claims 8 to 10, further comprising:
receiving the data collection configuration information in the format of the second mechanism; and if it is determined that the network device supports the second mechanism, sending the data collection configuration information in the format of the second mechanism to the network device.

12. A data processing apparatus, comprising:
a receiving unit, configured to receive data that is in a format of a first mechanism and that is sent by the network device:
a preprocessing unit, configured to preprocess the data;
a conversion unit, configured to convert the preprocessed data into data in a format of a second mechanism; and
a sending unit, configured to send the data in the format of the second mechanism to a data collection and analysis apparatus, wherein
the preprocessing comprises one or more of the following: data format conversion, data computation and supplementation, data compression and tailoring, data anonymization, data serialization, and transmission control protocol indicator calculation.

13. The apparatus according to claim 12, wherein the receiving unit is further configured to receive data that is in the format of the second mechanism and that is sent by the network device;
the preprocessing unit is further configured to preprocess the data in the format of the second mechanism; and
the sending unit is further configured to send the preprocessed data in the format of the second mechanism to the data collection and analysis apparatus.

14. The apparatus according to claim 12 or 13, wherein the receiving unit is further configured to receive data collection configuration information in the format of the second mechanism;
the conversion unit is further configured to: if it is determined that the network device does not support the second mechanism, convert the data collection configuration information in the format of the second mechanism into data collection configuration information in the format of the first mechanism; and
the sending unit is further configured to send the data collection configuration information in the format of the first mechanism to the network device.

15. The apparatus according to any one of claims 12 to 14, wherein the receiving unit is further configured to receive the data collection configuration information in the format of the second mechanism; and
the sending unit is further configured to: if it is determined that the network device supports the second mechanism, send the data collection configuration information in the format of the second mechanism to the network device.

16. A data processing apparatus, comprising a processor and a memory, wherein the memory is configured to store a program, and the processor invokes the program stored in the memory to perform the method according to any one of claims 8 to 11.

17. A computer readable storage medium, wherein the computer readable storage medium stores a computer program, and when the computer program is executed by a processor, the method according to any one of claims 8 to 11 is implemented.

## Amended claims

### Amended claims under Art. 19.1 PCT

1. A data processing apparatus, comprising:
a sending unit, configured to send a data collection request in a format of a first mechanism to a network device;
a receiving unit, configured to receive data that is in the format of the first mechanism and that is sent by the network device in response to the request; and
a conversion unit, configured to convert the received data in the format of the first mechanism into data in a format of a second mechanism, wherein
the sending unit is further configured to send the data in the format of the second mechanism to a data collection and analysis apparatus for data analysis; and
the format of the first mechanism is a format used for data transmission between the data processing apparatus and the network device, and the format of the second mechanism is a format used for data transmission between the data processing apparatus and the data collection and analysis apparatus.

2. The data processing apparatus according to claim 1, wherein the conversion unit is further configured to: before converting the data in the format of the first mechanism into the data in the format of the second mechanism, preprocess the data in the format of the first mechanism, wherein the preprocessing comprises one or more of the following: content format conversion, data computation and supplementation, data compression and tailoring, data anonymization, data serialization, or transmission control protocol indicator calculation.

3. The data processing apparatus according to claim 1 or 2, wherein the data collection request comprises data collection configuration information.

4. The data processing apparatus according to any one of claims 1 to 3, wherein the format of the first mechanism and the format of the second mechanism are any two of simple network management protocol SNMP, command-line interface CLI, syslog protocol, and telemetry protocol formats.

5. A data collection and processing system, comprising a data processing apparatus and a data collection and analysis apparatus, wherein
the data processing apparatus is configured to: send a data collection request in a format of a first mechanism to a network device, receive data that is in the format of the first mechanism and that is sent by the network device in response to the request, and send data in a format of the second mechanism to the data collection and analysis apparatus, wherein the format of the first mechanism is a format used for data transmission between the data processing apparatus and the network device, and the format of the second mechanism is a format used for data transmission between the data processing apparatus and the data collection and analysis apparatus; and
the data collection and analysis apparatus is configured to perform analysis based on the data after receiving the data sent by the data processing apparatus.

6. The data collection and processing system according to claim 5, wherein the data processing apparatus is further configured to: before converting the data in the format of the first mechanism into the data in the format of the second mechanism, preprocess the data in the format of the first mechanism, wherein the preprocessing comprises one or more of the following: content format conversion, data computation and supplementation, data compression and tailoring, data anonymization, data serialization, or transmission control protocol indicator calculation.

7. The data collection and processing system according to claim 5 or 6, wherein the data collection request comprises data collection configuration information.

8. The data collection and processing system according to any one of claims 5 to 7, wherein the format of the first mechanism and the format of the second mechanism are any two of simple network management protocol SNMP, command-line interface CLI, syslog protocol, and telemetry protocol formats.

9. The data collection and processing system according to any one of claims 5 to 8, further comprising a management and control system, configured to send the data collection request to the data processing apparatus.

10. The data collection and processing system according to any one of claims 5 to 9, further comprising:
the data processing apparatus, disposed on the network device; or disposed at a broadband access abstraction layer in a CloudCO architecture; or disposed in a regional data center.

11. A data collection method, comprising:
sending a data collection request in a format of a first mechanism to a network device; and
receiving data that is in the format of the first mechanism and that is sent by the network device in response to the request, and sending data in a format of the second mechanism to a data collection and analysis apparatus for data analysis, wherein the format of the first mechanism is a format used for transmitting data to the network device, and the format of the second mechanism is a format used for transmitting data to the data collection and analysis apparatus.

12. The data collection method according to claim 11, further comprising: before converting the data in the format of the first mechanism into the data in the format of the second mechanism, preprocessing the data in the format of the first mechanism, wherein the preprocessing comprises one or more of the following: content format conversion, data computation and supplementation, data compression and tailoring, data anonymization, data serialization, or transmission control protocol indicator calculation.

13. The data collection method according to claim 11 or 12, wherein the data collection request comprises data collection configuration information.

14. The data collection method according to any one of claims 11 to 13, wherein the format of the first mechanism and the format of the second mechanism are any two of simple network management protocol SNMP, command-line interface CLI, syslog protocol, and telemetry protocol formats.

15. The data collection method according to any one of claims 11 to 14, further comprising: receiving the data collection request sent by a management and control system.

16. A data processing apparatus, comprising a processor and a memory, wherein the memory is configured to store a program, and the processor invokes the program stored in the memory to perform the method according to any one of claims 11 to 15.

17. A computer readable storage medium, wherein the computer readable storage medium stores a computer program, and when the computer program is executed by a processor, the method according to any one of claims 11 to 15 is implemented.
